# EUROPÄISCHE PATENTSCHRIFT

(11) **EP 2 283 214 B1**
(45) Veröffentlichungstag und Bekanntmachung des Hinweises auf die Patenterteilung: **20.06.2012**
(21) Anmeldenummer: 09741986.5
(22) Anmeldetag: 23.04.2009
(51) Int. Cl.: F01N 3/20

(54) **VORRICHTUNG ZUR FÖRDERUNG EINES REDUKTIONSMITTELS UND VERFAHREN ZUR HERSTELLUNG EINES KRAFTFAHRZEUGES**
DEVICE FOR DELIVERING A REDUCTANT AND METHOD FOR PRODUCING A MOTOR VEHICLE
DISPOSITIF DE TRANSPORT D'UN AGENT RÉDUCTEUR ET PROCÉDÉ DE CONSTRUCTION D'UN VÉHICULE À MOTEUR

(30) Priorität: 09.05.2008 DE 102008022991
(43) Veröffentlichungstag der Anmeldung: 16.02.2011
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53840 Troisdorf (DE)
(74) Vertreter: Rössler, Matthias
(86) Internationale Anmeldenummer: PCT/EP2009/054910
(87) Internationale Veröffentlichungsnummer: WO 2009/135768

(56) Entgegenhaltungen:
- DE-A1- 10 324 482
- DE-A1-102005 061 145
- GB-A- 2 188 163
- US-A1- 2007 266 699

## Beschreibung

Die vorliegende Erfindung betrifft eine Vorrichtung zur Förderung eines Reduktionsmittels aufweisend zumindest zwei Elemente der Gruppe Speichermittel, Fördermittel, Umlenkmittel, Erfassungsmittel, Trennmittel, Auslassmittel, die mit einem Leitungsmittel miteinander verbunden sind. Darüber hinaus wird ein Verfahren zur Herstellung eines Kraftfahrzeuges mit einer gattungsgemäßen Vorrichtung angegeben. Die Erfindung findet insbesondere Anwendung beim System zur Bereitstellung von Ammoniak und/oder eines Ammoniakvorläufers für ein Abgassystem einer mobilen Verbrennungskraftanlage, wie beispielsweise das Abgassystem eines Kraftfahrzeuges.

Es ist bekannt, dass unter Einsatz eines Reduktionsmittels die im Abgas enthaltenen Stickoxide deutlich reduziert werden können. Dabei wird in besonderem Maße auf das so genannte SCR-Verfahren zurückgegriffen ("selective catalytic reduction"), bei dem direkt Ammoniak und/oder ein Ammoniakvorläufer in die Abgasleitung eingegeben wird, so dass dort eine Umsetzung der Stickoxide (NOₓ) erfolgen kann. Dabei werden Stickoxide unter Zugabe des Reduktionsmittels zu N₂ (Stickstoff) und H₂O (Wasser) reduziert. Als Reduktionsmittel dient bevorzugt CH₄N₂O (Harnstoff) oder NH₃ (Ammoniak), das in wässriger Lösung vorliegt (gelegentlich auch mit dem Handelsnamen AdBlue bezeichnet) und vor einem SCR-Katalysator in das Abgas eingespritzt wird. Im Katalysator findet nun eine durch die Katalysatoroberfläche beschleunigte Reduktion statt. Es gibt hierfür im Wesentlichen zwei Arten von Katalysatoren. Die eine Art besteht im Wesentlichen aus Titandioxid, Vanadiumpentoxid, und Wolframoxid. Die andere Art verwendet Zeolithe.

Besondere Probleme bereitet hierbei die Bereitstellung des Reduktionsmittels. Es wurde bereits mehrfach versucht, das Reduktionsmittel, wie beispielsweise Hamstoff, als fein disperse Flüssigkeitstropfen mit einem Druckgas in die Abgasleitung einzuführen. Auch sind Systeme bekannt, bei denen das Reduktionsmittel in flüssiger und/oder fester Form bevorratet und dann vor der Abgabe in das Abgassystem aufbereitet wird (Verdampfung und/oder Thermolyse und/oder Hydrolyse). Außerdem sind auch Verfahren und Vorrichtungen bekannt, bei denen das Reduktionsmittel flüssig in die Abgasleitung eingedüst wird, beispielsweise unter Einsatz eines Dosierventils und/oder einer Dosierpumpe.

Gerade die Bereitstellung des Wasser-umfassenden Reduktionsmittels in flüssiger Form, beispielsweise als Harnstoff-Wasser-Lösung, birgt jedoch die Gefahr des Einfrierens bei tiefen Temperaturen. Die Harnstoff-Wasser-Lösung hat einen Gefrierpunkt von circa -11 °C und verhält sich dabei im Wesentlichen wie Wasser, nämlich unter Bildung von Eis und damit einer Volumenausdehnung in den Komponenten des SCR-Systems, die Harnstoff-Wasser-Lösung umfassen.

Zur Vermeidung von Schäden wurde bereits vorgeschlagen, die Förder-Apparatur der Harnstoff-Wasser-Lösung zu leeren und/oder zu heizen. Diese bekannten Systeme sind jedoch zum Teil nur unter Mitwirkung eines Motormanagements durchzuführen, so dass eine permanente Überwachung des Systems bei gleichzeitiger Überwachung der Außentemperatur erforderlich ist. Zudem müssen Antriebe, Fördersysteme und dergleichen bereitgestellt werden, die mehrere Funktionen erfüllen, bzw. separat angesteuert werden. Damit wird das System relativ komplex und teuer.

In der DE 103 24 482 A1 wird eine Vorrichtung zur Dosierung eines Reduktionsmittels ins Abgas eines Verbrennungsmotors beschrieben. In einer Reduktionsnüttelleitung kann dabei ein Kühlkörper zur Abfuhr von Wärme vorgesehen sein, die ein zurückgeführtes Reduktionsmittel aufweist. So soll ein übermäßiges Überhitzen des Reduktionsmittels im Betrieb verhindert werden.

In der US 2007/0266699 A1 wird ein Zufuhrsystem für ein Reduktionsmittel in das Abgassystem einer Verbrennungskraftmaschine beschrieben, wobei eine Reduktionsmittelleitung zwei parallele Zweige mit unterschiedlicher thermischer Isolierung aufweist. Zudem kann einer der Zweige z. B. mit Kühlrippen versehen sein. Auch dies dient der Vermeidung von Überhitzungen.

Aufgabe der vorliegenden Erfindung ist es, die in Bezug auf den Stand der Technik geschilderten Probleme zumindest teilweise zu lösen. Insbesondere soll die Vorrichtung zur Förderung eines Reduktionsmittels, hier insbesondere Harnstoff-Wasser-Lösung angegeben werden, die einen Einfrierschutz für die einzelnen Komponenten der Vorrichtung aufweist. Zudem soll die Vorrichtung relativ einfach aufgebaut sein und damit auch kostengünstig in der Herstellung. Darüber hinaus soll auch ein Verfahren zur Herstellung eines Kraftfahrzeuges angegeben werden, so dass die Vorrichtung zur Förderung des Reduktionsmittels so eingebaut wird, dass ein langer, störungsfreier Betrieb der Vorrichtung auch unter extrem kalten Bedingungen gewährleistet ist.

Diese Aufgaben werden gelöst mit einer Vorrichtung gemäß den Merkmalen des Patentanspruchs 1 sowie einem Verfahren zur Herstellung eines Kraftfahrzeuges mit den Merkmalen des Patentanspruchs 8. Vorteilhafte Weiterbildungen der Erfindung werden in den jeweils abhängig formulierten Patentansprüchen angegeben. Die Beschreibung, insbesondere im Zusammenhang mit den Figuren, erläutert die Erfindung weiter und gibt zusätzliche Ausführungsvarianten der Erfindung an.

Die erfindungsgemäße Vorrichtung zur Förderung eines Reduktionsmittels weist zumindest zwei Elemente der folgenden Gruppe auf: Speichermittel, Fördermittel, Umlenkmittel, Erfassungsmittel, Trennmittel, Auslassmittel. Diese zumindest zwei Elemente sind mit einem Leitungsmittel miteinander verbunden, wobei wenigstens ein Element drucksensibel ist und das angrenzende Leitungsmittel nahe diesem drucksensiblen Element zumindest eine Wärmesenke bildet.

Bei der erfindungsgemäßen Vorrichtung handelt es sich insbesondere um eine solche, bei der eine Harnstoff-Wasser-Lösung im flüssigen Zustand in den Abgasstrom bzw. in eine Abgasanlage zugegeben wird.

Dabei wird das Reduktionsmittel regelmäßig in einem Speichermittel bevorratet. Ein solches Speichermittel ist beispielsweise ein Tank, wobei dieser gegebenenfalls auch mehrere Tankvolumina umfassen kann. Der Tank ist insbesondere aus Kunststoff gefertigt. Zusätzlich können in diesem Speichermittel Druckausgleichsmittel, Füllstandssensoren, Heizungen und dergleichen vorgesehen sein.

Das im Speichermittel regelmäßig in flüssiger Form gespeicherte Reduktionsmittel wird mittels Fördermittel aus dem Speichermittel transportiert. Üblicher Weise umfassen diese Fördermittel eine Pumpe, wie beispielsweise eine Kolbenhubpumpe, eine Membranpumpe oder dergleichen.

Zwischen diesem Fördermittel und dem Speichermittel ist bevorzugt ein Trennmittel vorgesehen, beispielsweise nach Art eines Filters. Dabei ist bevorzugt, dass das Trennmittel stets nur in eine Richtung geströmt wird und sich somit die Ablagerungen aus dem Reduktionsmittel auf einer Seite des Trennmittels ablagern.

Mit den Fördermitteln wird das Reduktionsmittel nun beispielsweise hin zum Auslassmittel gefördert, wie beispielsweise einem Injektor, einer Düse, einem Auslassventil oder dergleichen.

Bevorzugt ist dabei, dass in dem Bereich zwischen dem Fördermittel und dem Auslassmittel wenigstens ein Umlenkmittel vorgesehen ist, beispielsweise ein steuerbares bzw. regelbares Ventil, um einen Teil des mit dem Fördermittel geförderten Reduktionsmittels umzulenken, beispielsweise hin zu einer Rückführung zum Speichermittel.

Darüber hinaus können Erfassungsmittel, wie beispielsweise Sensoren für Temperatur und/oder Druck und/oder Konzentration des Reduktionsmittels im Verlauf der Vorrichtung zur Förderung des Reduktionsmittels vorgesehen sein.

Die einzelnen Elemente, wobei bevorzugt mehr als 2, insbesondere mindestens 3 oder sogar zumindest 4 der oben genannten Elemente vorgesehen sind, sind mit Leitungsmitteln miteinander verbunden. Die Leitungsmittel können insbesondere wenigstens ein Rohr und/oder Schlauch umfassen.

Ganz besonders bevorzugt ist dabei ein Leitungssystem, wobei das Reduktionsmittel nacheinander zumindest folgende Komponenten bis hin zum Abgassystem durchströmt: 1. Speichermittel, 2. Leitungsmittel, 3. Trennmittel, 4. Leitungsmittel, 5. Fördermittel, 6. Leitungsmittel mit zumindest einem Erfassungsmittel, 7. steuerbare Umlenkmittel hin zu einer Rückführung, 8. Leitungsmittel, 9. Auslassmittel.

Zumindest einige der oben genannten Elemente können drucksensibel ausgeführt sein. Das bedeutet insbesondere, dass diese mit einer Beschädigung und/oder einer Minderfunktion reagieren, wenn das Reduktionsmittel auf diese einen erhöhten Druck ausübt. Regelmäßig wird in den Leitungsmitteln während des Betriebes der Vorrichtung (nachfolgend des Fördermittels) ein Druck des Reduktionsmittels von 6 bis 10 bar vorliegen. Bleibt nunmehr das Reduktionsmittel in den Leitungsmitteln und gefriert, wird dieser Druck in den Leitungsmitteln aufgrund der Volumenzunahme des Reduktionsmittels vergrößert. Dabei kann der sich in den Leitungsmitteln aufbauende Druck zu einer Gefährdung des drucksensiblen Elements führen. Ein solches drucksensible Element ist das Fördermittel (insbesondere eine Membranpumpe), das Erfassungsmittel (insbesondere ein Drucksensor) und/oder das Auslassmittel (insbesondere eine Einspritzdüse).

Hier wird nun vorgeschlagen, dass das an das wenigstens eine drucksensible Element angrenzende Leitungsmittel nahe dieses drucksensiblen Elementes zumindest eine Wärmesenke bildet. Das heißt mit anderen Worten auch, dass in unmittelbarer Nachbarschaft zu dem drucksensiblen Element das eine oder beide Leitungsmittel so gestaltet sind, dass diese besonders schnell Wärme an die Umgebung abgeben. Das führt insbesondere dazu, dass sich die Leitungsmittel gerade in dieser Zone besonders rasch abkühlen. Zu diesem Zweck können in dieser Zone geeignete Eigenschaften des Leitungsmittels bereitgestellt werden, wie z. B. Wärmeleitfähigkeit, Wärmeabgabeoberfläche, Wärmekapazität, Wärmedurchdringung, Wärmeübergang, etc. Gegebenenfalls können auch aktive (steuerbare) Kühlvorrichtungen vorgesehen sein (Gebläse, Peltier-Element, etc.)

Folglich kann so gewährleistet werden, dass gerade im Bereich dieser Wärmesenke bei Erreichen der Gefriertemperatur des Reduktionsmittels genau dort die Erstarrung und damit die Volumenexpansion einsetzt. Da die Wärmesenke nun sehr nahe dieses drucksensiblen Elementes positioniert ist, beispielsweise mit einer Distanz von maximal 100 mm, ist die Flüssigkeitssäule zwischen der Wärmesenke und dem angrenzenden drucksensiblen Elementes sehr gering. Folglich kann über diese kurze Distanz auch nur ein sehr geringes Druckgefälle aufgebaut werden, so dass hier keine wesentliche zusätzliche Belastung für das drucksensible Element resultieren kann. Folglich sind diese Elemente gerade für den Zustand des Einfrierens des Reduktionsmittels, welches sich in den Leitungsmitteln befindet, geschützt.

Gemäß einer bevorzugten Ausgestaltung der Erfindung ist die Wärmesenke mit einer Zone des Leitungsmittels gebildet, die eine gegenüber anderen Bereichen des Leitungsmittels vergrößerte Oberfläche aufweist. Zu diesem Zweck ist es möglich, dass die Wand des Leitungsmittels (zumindest nach außen zur Umgebung hin) strukturiert ist, also beispielsweise Erhebungen und Senken in Umfangsrichtungen aufweist. Es ist aber auch möglich, dass der Leitungsabschnitt im Bereich dieser Zone mit zumindest einem zusätzlichen Bauteil ausgeführt ist, das die vergrößerte Oberfläche ausbildet. Das Bauteil kann beispielsweise mit einer das Leitungsmittel umschließenden ringförmigen Gestalt, beispielsweise nach Art einer Hülse, gebildet sein, wobei gegebenenfalls Kühlrippen und dergleichen dort vorgesehen sind.

Außerdem wird auch als vorteilhaft erachtet, dass die Wärmesenke mit einer Zone des Leitungsmittels gebildet ist, die eine Wärmebrücke hin zur Umgebung aufweist. Hierbei ist insbesondere gemeint, dass ein stofflicher, Wärme leitender Kontakt dieser Zone mit einer regelmäßig kühleren Umgebung gewährleistet ist. Hierzu können insbesondere Wärme leitende Verbindungen hin zu der kälteren Umgebung realisiert sein, beispielsweise nach Art einer Schraubverbindung oder dergleichen. Die kältere Umgebung wird insbesondere durch Bauteile der Karosserie und/oder Bauteile verwirklicht, die mit intensivem Kontakt hin zur kälteren äußeren Umgebung bzw. im Einflussbereich der Umgebungstemperatur positioniert sind. Zu diesem Zweck ist die Wärmesenke dann so ausgebildet, dass eine rasche Wärmeabfuhr von dem Bereich der Zone des Leitungsmittels hin zur kälteren Umgebung vernetzt ist, beispielsweise durch eine entsprechende Wärmeleitung.

Gemäß einer Weiterbildung der Erfindung wird vorgeschlagen, dass die Leitungsmittel mit einer flexiblen Wand ausgeführt sind. Gerade für den Fall, dass mehrere Wärmesenken bezüglich eines Leitungsmittels ausgebildet sind, ist es vorteilhaft, wenn die bei der Erstarrung des Reduktionsmittels entstehende Volumenzunahme durch das Leitungsmittel selbst kompensiert werden können. Hierzu ist insbesondere als Leitungsmittel ein Kunststoff-Schlauch mit entsprechend elastischen bzw. flexiblen Eigenschaften zu wählen, der beispielsweise eine Volumenvergrößerung von circa 10 % (in Längen und/oder Umfangsrichtung) selbst kompensieren kann.

Gemäß einer Weiterbildung wird auch vorgeschlagen, dass die Wärmesenke mit einem gegenüber anderen Bereichen dieses Leitungsmittels verschiedenen Material gebildet ist. Das andere Material, beispielsweise Metall, kann mit der Wand des Leitungsmittels selbst ausgebildet sein. Es ist aber möglich, außen um das Leitungsmittel ein anderes, gut Wärme leitendes, Material in Wärme leitendem Kontakt mit dem Leitungsmittel zu positionieren. In manchen Fällen kann es auch sinnvoll sein, dass die Wand des Leitungsmittels mit dem anderen Material durchdrungen ist. Regelmäßig ist gewünscht, dass das Leitungsmittel aus einem über die Länge des Leitungsmittels zwischen zwei Elementen gleichen Materials ausgeführt ist, wobei genau in der gewünschten Zone hiervon eine Abweichung vorliegt.

Zudem wird auch vorgeschlagen, dass in der Zone der Wärmesenke eine aktivierbare Heizung vorgesehen ist. Eine solche Heizung ist insbesondere elektrischer Natur, so dass sie schnell und bedarfsgerecht aktiviert werden kann. Sie dient insbesondere dazu, den relativ kälteempfindlichen Bereich des Leitungsmittels bei einem Wiederstart des Systems aufzuheizen. Zu diesem Zweck können beispielsweise durchströmbare elektrische Leiter, Induktionsheizer oder dergleichen vorgesehen sein.

Außerdem wird als vorteilhaft erachtet, dass das Leitungsmittel benachbart zur Wärmesenke mit einer gegenüber anderen Bereichen diesen Leitungsmittels größeren thermischen Isolation vorgesehen ist. Das heißt mit anderen Worten insbesondere, dass die Leitungsmittel benachbart zu den Zonen mit der Wärmesenke so gestaltet sind, dass diese verlangsamt abkühlen. So kann eine definierte Abkühlung des Reduktionsmittels und damit auch ein gezielter Druckaufbau innerhalb des Leitungsmittels realisiert werden. Die thermische Isolation kann Bestandteil der Wand des Leitungsmittels sein. Es ist aber auch möglich, diese auf der Außenseite und/oder der Innenseite des Leitungsmittels vorzusehen.

Gemäß einem weiteren Aspekt der Erfindung wird ein Verfahren zur Herstellung eines Kraftfahrzeuges mit einer Vorrichtung zur Förderung eines Reduktionsmittels vorgeschlagen, wobei die Vorrichtung zumindest zwei Elemente der Gruppe Speichermittel, Fördermittel, Umlenkmittel, Erfassungsmittel, Trennmittel, Auslassmittel aufweist, die mit einem Leitungsmittel miteinander verbunden sind, umfassend zumindest die folgenden Schritte:
(a) Anordnen der Elemente an das Kraftfahrzeug;
(b) Abkühlen des Kraftfahrzeuges;
(c) Identifizierung zumindest eines Einfrierpunktes in einem Leitungsmittel angrenzend an ein drucksensibles Element;
(d) Ausbilden zumindest einer Wärmesenke zwischen dem Gefrierpunkt und dem drucksensiblen Element.

Das Verfahren dient insbesondere zur Auslegung der hier erfindungsgemäß beschriebenen Vorrichtung zur Förderung eines Reduktionsmittels. Insoweit wird auch auf die damit in Zusammenhang stehenden Erläuterungen gleichermaßen verwiesen.

Gemäß dem hier vorgeschlagenen Verfahren wird also zunächst die erforderliche Vorrichtung zur Förderung des Reduktionsmittels am Kraftfahrzeug positioniert. Die Lage und/oder Befestigungspunkte der Vorrichtung am Kraftfahrzeug bzw. der Karosserie und/oder der Abgasanlage, etc. ist nun eindeutig definiert. Mit Schritt (b) wird nun das Abkühlverhalten der Vorrichtung zur Förderung des Reduktionsmittels bei diesem Fahrzeug bestimmt. Dabei wird insbesondere beobachtet, wo das in den Leitungsmitteln angeordnete Reduktionsmittel zuerst gefriert und dann seinen Erstarrungsvorgang hin ausbreitet. Damit können also Einfrierpunkte und die Einfrierrichtung von dort ausgehend eindeutig bestimmt werden. Dies ist Gegenstand des Schrittes (c), wobei gleichzeitig identifiziert wird, bezüglich welchen Elementes der Einfrierpunkt und/oder die Einfrierrichtung problematisch ist, also mit der Erstarrung ein unerwünscht hoher Druck im Leitungsmittel benachbart zu dem drucksensiblen Element aufgebaut wird. Erreicht das Reduktionsmittel nun in diesem Leitungsmittel einen Druck, der für das drucksensible Element unerwünscht ist, wird an einer geeigneten Zone zumindest eine Wärmesenke ausgebildet (Schritt (d)). Die Wärmesenke ist dabei zwischen dem Einfrierpunkt und dem drucksensiblen Element anzuordnen, bevorzugt in unmittelbarer Nachbarschaft zu dem drucksensiblen Element. Dies führt nun zu einem veränderten Einfrierungsverhalten für die Vorrichtung an dem Kraftfahrzeug. Das identifizierte Leitungsmittel kühlt nun zunächst im Bereich der Wärmesenke aus und bildet nunmehr ein Erfrierungsverhalten, das einen gezielten (druckbeständigen) Verschluss des Leitungsmittels und/oder eine von dort ausgehende Erstarrungsfront zur Folge hat. Gegebenenfalls kann der Einfrierpunkt auch mit einer entsprechenden thermischen Isolierung am Leitungsmittel ausgeführt sein, um dort das Einfrieren zu verzögern. Auf diese Weise kann für die konkrete Einbaulage der Vorrichtung am Kraftfahrzeug sicher das Einfrierungsverhalten identifiziert und erfindungsgemäß geändert werden.

In diesem Zusammenhang wird als besonders vorteilhaft erachtet, dass in der Zone mit der Wärmesenke außen an dem Leitungsabschnitt eine separate Wärmebrücke positioniert wird. Dabei ist die Wärmebrücke beispielsweise nach Art einer Schelle ausgerührt, die an dem Leitungsmittel außen anliegt und mit beispielsweise einem schnell abkühlenden Teil der Karosserie (z. B. kraftschlüssig) Wärme leitend verbunden ist. Eine solche separate Wärmebrücke ist leicht zu montieren und kann auch flexibel mit anderen Bestandteilen des Kraftfahrzeuges verbunden werden. Die Wärmebrücke kann ggf. auch mit einem Gehäuse des drucksensiblen Elementes außen verbunden sein.

Die Erfindung sowie das technische Umfeld werden anhand der Figuren näher erläutert. Es ist darauf hinzuweisen, dass die Figuren besonders bevorzugte Ausführungsvarianten zeigen, auf die die Erfindung jedoch nicht begrenzt ist. Gleiche Bezugszeichen beziehen sich dabei regelmäßig auch auf gleiche Elemente. Es zeigen schematisch:
- Fig. 1:: einen grundsätzlichen Aufbau einer bevorzugten Ausführungsvariante der Vorrichtung in einem Kraftfahrzeug,
- Fig. 2:: eine Detailansicht einer weiteren Ausführungsvariante der erfindungsgemäßen Vorrichtung, und
- Fig. 3:: noch eine weitere Ausführungsvariante der Vorrichtung zur Förderung eines Reduktionsmittels im Detail.

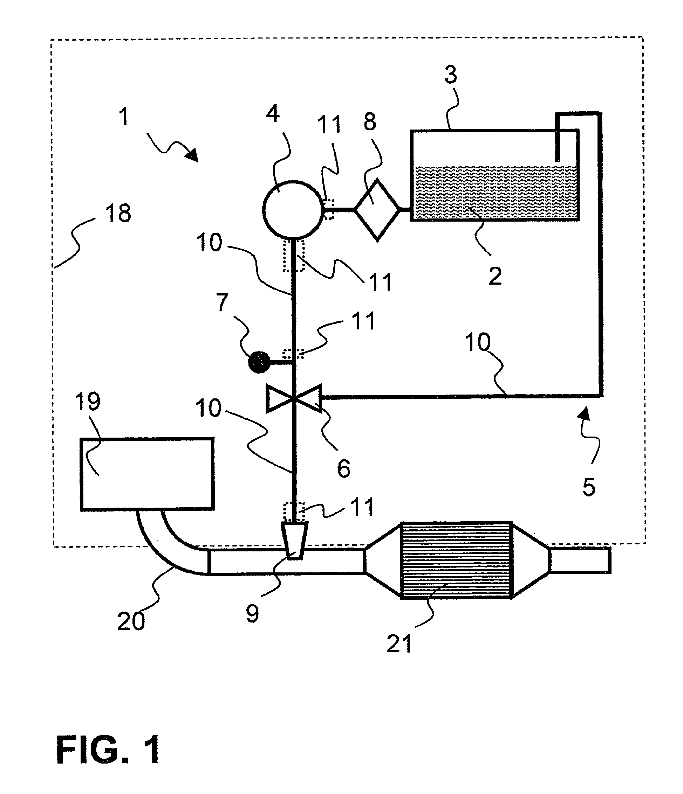

Fig. 1 veranschaulicht schematisch den Aufbau einer bevorzugten Ausführungsvariante der Vorrichtung 1 zur Förderung eines Reduktionsmittels 2, wie insbesondere Harnstoff-Wasser-Lösung. Dargestellt ist schematisch die Vorrichtung 1 in einem Kraftfahrzeug 18. Ein solches Kraftfahrzeug 18 weist regelmäßig eine Verbrennungskraftmaschine 19, beispielsweise einen Dieselmotor, auf, in dem Abgas produziert wird, welches über die Abgasleitung 20 in die Umgebung abgegeben wird. In Teilen dieser Abgasleitung 20 sind regelmäßig mehrere Abgasbehandlungseinheiten, wie beispielsweise Adsorber, Katalysatoren, Filter, Strömungsmischer und dergleichen. Hier ist beispielhaft eine SCR-Katalysator 21 veranschaulicht, der das mit dem Abgas vermengte Reduktionsmittel stromabwärts umsetzt, so dass hier die unerwünschten Stickoxide aus dem Abgas entfernt werden (SCR-Verfahren).

Zentral ist nunmehr die erfindungsgemäße Vorrichtung 1 dargestellt. Oben rechts ist das Speichermittel 3 nach Art eines Tanks dargestellt, in dem das flüssige Reduktionsmittel 2, hier Harnstoff-Wasser-Lösung, bevorratet wird. Bedarfsorientiert und zu konkret vorgebbaren Zeitpunkten wird das Reduktionsmittel 2 aus dem Speichermittel 3 heraus gefördert, nämlich unter Einsatz des Fördermittels 4. Das Fördermittel 4, insbesondere eine Membranpumpe, saugt das Reduktionsmittel 2 aus dem Speichermittel 3 durch ein Trennmittel 8 nach Art eines Filters, der im Leitungsmittel 10 zwischen Speichermittel 3 und Fördermittel 4 positioniert ist. Ausgehend vom Fördermittel 4 wird das Reduktionsmittel hin zum Auslassmittel 9, beispielsweise einer Einspritzdüse, gefördert, wenn Reduktionsmittel 2 in die Abgasleitung 20 eingegeben werden soll.

In der hier veranschaulichten Ausführungsvariante ist zwischen dem Fördermittel 4 und dem Auslassmittel 9 ein Umlenkmittel 6 vorgesehen. Dieses kann insbesondere dazu dienen, den Druck des Reduktionsmittels 2 innerhalb der Leitungsmittel 10 zwischen Fördermittel 4 und Auslassmittel 9 bei Bedarf zu reduzieren, wenn die Vorrichtung 1 nicht in Betrieb ist. Zu diesem Zweck kann das in diesem Leitungsmittel 10 befindliche Reduktionsmittel über eine Rückführung 5 und geeignete Leitungsmittel 10 wieder in das Speichermittel 3 überführt werden. Zusätzlich umfasst das Leitungsmittel 10 zwischen Fördermittel 4 und Umlenkmittel 6 ein Erfassungsmittel 7, beispielsweise einen Drucksensor.

Um nunmehr die drucksensiblen Elemente (hier Fördermittel 4, Auslassmittel 9 und Erfassungsmittel 7) gegen eine zu hohe Druckbelastung durch das Reduktionsmittel beim Einfrieren zu schützen, sind direkt benachbart zu diesen Elementen, einseitig und/oder zweiseitig, Wärmesenken 11 gebildet. Im Bereich dieser Wärmesenken 11 friert das Reduktionsmittel in den Leitungsmitteln 10 zuerst ein, so dass kein wesentlicher Druckaufbau hin zu den drucksensiblen Elementen erfolgt.

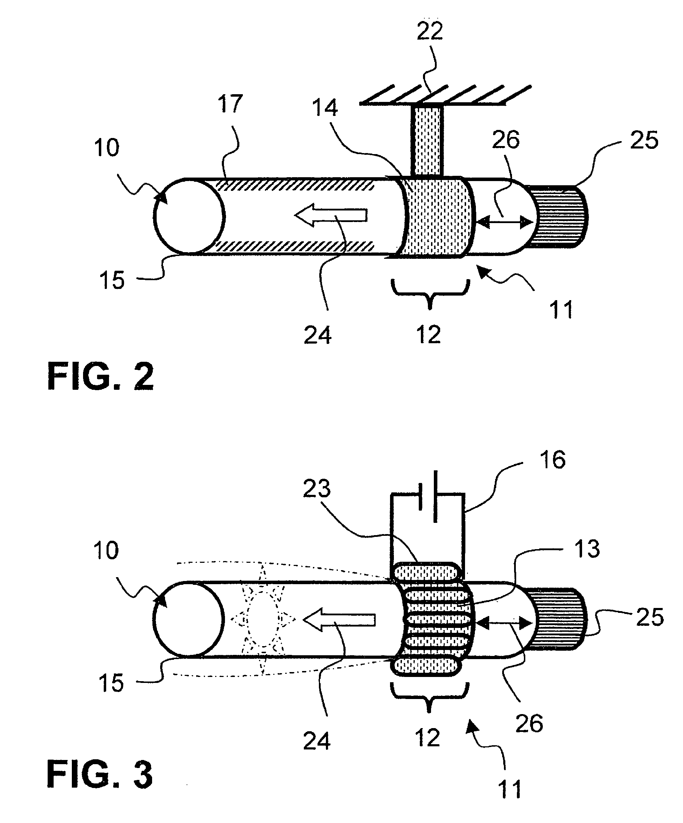

Ein Beispiel für eine solche Zone 12 mit einer Wärmesenke 11 geht aus der Fig. 2 hervor. Dabei ist das Leitungsmittel 10 mit einer Wärmebrücke 14 ausgeführt, die außen auf der Wand 15 formschlüssig und in Wärme leitendem Kontakt zum Leitungsmittel 10 positioniert ist. Diese Wärmebrücke 10, beispielsweise nach Art einer Schelle, ist zudem an einem Kältepunkt 22 angebunden, also insbesondere in wärmetechnischem Kontakt. Dies führt dazu, dass beim Abkühlen des Kraftfahrzeuges gerade dieser Kältepunkt 22 rasch abkühlt und damit die Wärme aus der Zone 12 des Leitungsmittels 10 abzieht. Damit wird in dieser Zone 12 ein früheres Erstarren bzw. Gefrieren des Reduktionsmittels erreicht. Dies führt dann dazu, dass der Druckaufbau hin zum Anschluss 25 zum benachbarten drucksensiblen Element (hier nicht dargestellt) aufgrund der kurzen Distanz 26 klein bleibt. Stattdessen erfolgt der Druckaufbau in Richtung der Einfrierrichtung 24. Das verlangsamte Einfrieren benachbart zur Zone 12 und gegenüberliegend zum Anschluss 25 wird dadurch verbessert, dass dort eine thermische Isolation 17 vorgesehen ist.

Ein anderes Beispiel für eine solche Ausgestaltung einer Wärmesenke 11 geht aus Fig. 3 hervor. Die Zone 12 ist hierbei mit einem Radiator 23 ausgeführt, der ebenfalls formschlüssig und insbesondere in Wärme leitendem Kontakt an dem Leitungsmittel 10 positioniert ist. Der Radiator 23 weist eine Vielzahl von Kühlrippen auf, die die äußere Oberfläche 13 vergrößern. Auch auf diese Weise wird ein frühzeitiges Einfrieren des Reduktionsmittels in dem Leitungsmittel 10 im Bereich der Zone 12 motiviert. Dazu ist die Zone 12 bevorzugt unmittelbar am Anschluss 25 ausgebildet, beispielsweise mit einer maximalen Distanz 26 von höchstens 50 mm.

Im linken Teilbereich von Fig. 3 ist auch zu erkennen, dass die Leitungsmittel 10 mit einer flexiblen Wand 15 gebildet sind. Gefriert also das darin befindliche Reduktionsmittel ausgehend von der Zone 12 in Einfrierrichtung 24, kann die flexible Wand 15 den Zuwachs an Volumen kompensieren, indem sich dessen Querschnitt erweitert. So kann insbesondere hin zur nächsten Wärmesenke und/oder dem nächsten Element ein Ausgleichsvolumen geschaffen werden.

Für den Fall, dass die Leitungsmittel 10 vollständig eingefroren gewesen sind, ist es auch vorteilhaft, ein schnelles Verflüssigen des Reduktionsmittels zu gewährleisten. Zu diesem Zweck wird hier vorgeschlagen, die Zone 12 bzw. den Radiator 23 mit einer Heizung 16 auszuführen, so dass bedarfsgerecht und schnell elektrische Energie bereitgestellt werden kann, die eine Wärmezufuhr hin zum Leitungsmittel 10 und damit zum Reduktionsmittel gewährleistet.

### Bezugszeichenliste

- 1: Vorrichtung
- 2: Reduktionsmittel
- 3: Speichermittel
- 4: Fördermittel
- 5: Rückführung
- 6: Umlenkmittel
- 7: Erfassungsmittel
- 8: Trennmittel
- 9: Auslassmittel
- 10: Leitungsmittel
- 11: Wärmesenke
- 12: Zone
- 13: Oberfläche
- 14: Wärmebrücke
- 15: Wand
- 16: Heizung
- 17: Isolation
- 18: Kraftfahrzeug
- 19: Verbrennungskraftmaschine
- 20: Abgasleitung
- 21: SCR-Katalysator
- 22: Kältepunkt
- 23: Radiator
- 24: Einfrierrichtung
- 25: Anschluss
- 26: Distanz

## Patentansprüche

1. Vorrichtung (1) zur Förderung eines Reduktionsmittels (2), aufweisend zumindest zwei Elemente der Gruppe Speichermittel (3), Fördermittel (4), Umlenkmittel (6), Erfassungsmittel (7), Trennmittel (8), Auslassmittel (9), die mit einem Leitungsmittel (10) miteinander verbunden sind, wobei wenigstens ein Element drucksensibel ist, dass heißt mit einer Beschädigung und/oder einer Minderfunktion reagiert, wenn das Reduktionsmittel auf dieses einen erhöhten Druck ausübt, wobei das wenigstens eine Element eins aus der folgenden Gruppe ist:
- Fördermittel (4), insbesondere eine Pumpe,
- Erfassungsmittel (7), insbesondere ein Sensor für Temperatur und/oder Druck und/oder Konzentration des Reduktionsmittels, oder
- Auslassmittel (9), insbesondere ein Injektor, eine Düse oder ein Auslassventil,
**dadurch gekennzeichnet, dass** das angrenzende Leitumgsmittel (10) nahe dieses drucksensiblen Elementes mit einer Distanz (26) von maximal 100 mm zumindest eine Wärmesenke (11) bildet, wobei im Bereich der zumindest einen Wärmesenke (11) eine Wärmeabgabe hin zur Umgebung so erfolgt, dass bei Erreichen der Gefriertemperatur des Reduktionsmittels (2) dort die Erstarrung und die Volumenespansion beginnt, und die Wärmesenke (11) durch zumindest eine der folgenden Eigenschaften des Leitungsmittels (10) bereitgestellt wird: Wärmeleitfähigkeit, Wärmeabgabeoberfläche, Wärmekapazität, Wärmedurchdrinzung, Wärmeübergang, und aktive Kühlvorrichtungen.

2. Vorrichtung (1) nach Patentanspruch 1, **dadurch gekennzeichnet, dass** die Wärmesenke (11) mit einer Zone (12) des Leitungsmittels (10) gebildet ist, die eine gegenüber anderen Bereichen dieses Leitungsmittels (10) vergrößerte Oberfläche (13) aufweist.

3. Vorrichtung (1) nach Patentanspruch 1 oder 2, **dadurch gekennzeichnet, dass** die Wärmesenke (11) mit einer Zone (12) des Leitungsmittels (10) gebildet ist, die eine Wärmebrücke (14) hin zur Umgebung aufweist.

4. Vorrichtung (1) nach einem der vorhergehenden Patentansprüche, **dadurch gekennzeichnet, dass** die Leitungsmittel (10) mit einer flexiblen Wand (15) ausgeführt sind.

5. Vorrichtung (1) nach einem der vorhergehenden Patentansprüche, **dadurch gekennzeichnet, dass** die Wärmesenke (11) mit einem gegenüber anderen Bereichen dieses Leitungsmittels (10) verschiedenen Material gebildet ist.

6. Vorrichtung (1) nach einem der vorhergehenden Patentansprüche, **dadurch gekennzeichnet, dass** in der Zone (12) der Wärmesenke (11) eine aktivierbare Heizung (16) vorgesehen ist.

7. Vorrichtung (1) nach einem der vorhergehenden Patentansprüche, **dadurch gekennzeichnet, dass** das Leitungsmittel (10) benachbart zur Wärmesenke (11) mit einer gegenüber anderen Bereichen dieses Leitungsmittels (10) größeren thermischen Isolation (17) versehen ist.

8. Verfahren zur Herstellung eines Kraftfahrzeuges (18) mit einer Vorrichtung (1) zur Förderung eines Reduktionsmittels (2) aufweisend zumindest zwei Elemente der Gruppe Speichermittel (3), Fördermittel (4), Umlenkmittel (6), Erfassungsmittel (7), Trennmittel (8), Auslassmittel (9), wobei wenigstens ein Element der Vorrichtung (1) drucksensibel ist, dass heißt mit einer Beschädigung und/oder einer Minderfunktion reagiert, wenn das Reduktionsmittel (2) auf dieses einen erhöhten Druck ausübt, und weiter die Elemente der Vorrichtung (1) mit einem Leitungsmittel (10) miteinander verbunden sind, umfassend zumindest die folgenden Schritte:
(a) Anordnen der Elemente der Vorrichtung (1) an das Kraftfahrzeug (18);
(b) Abkühlen des Kraftfahrzeuges (18);
(c) Identifizierung zumindest eines Einfrierpunktes in dem Leitungsmittel (10) angrenzend an das drucksensibles Element;
(d) Ausbilden zumindest einer Wärmesenke (11) zur Wärmeabgabe hin zur Umgebung zwischen dem Einfrierpunkt und dem drucksensiblen Element.

9. Verfahren zur Auslegung einer Vorrichtung (1) zur Förderung eines Reduktionsmittels (2) nach einem der Patentansprüche 1 bis 7 bei einem Kraftfahrzeug (18) umfassend zumindest die folgenden Schritte:
(a) Anordnen der Elemente der Vorrichtung (1) an das Kraftfahrzeug (18);
(b) Abkühlen des Kraftfahrzeuges (18);
(c) Identifizierung zumindest eines Einfrierpunktes in dem Leitungsmittel (10) angrenzend an das drucksensible Element;
(d) Ausbilden zumindest einer Wärmesenke (11) zur Wärmeabgabe hin zur Umgebung zwischen dem Einfrierpunkt und dem drucksensiblen Element.

10. Verfahren nach Patentanspruch 8 oder 9, bei dem in der Zone (12) mit der Wärmesenke (11) außen an dem Leitungsmittel (10) eine separate Wärmebrücke (14) positioniert wird.

## Claims

1. Apparatus (1) for delivering a reducing agent (2), having at least two elements from the group comprising storage means (3), delivery means (4), deflecting means (6), detecting means (7), separating means (8), outlet means (9), which are connected to one another via a line means (10), wherein at least one element is pressure-sensitive, that means it may be damaged and/or impaired in terms of function if subjected to an elevated pressure by the reducing agent, wherein said at least one element is one of the following group:
- delivery means (4), in particular a pump,
- detecting means (7), in particular a sensor for temperature and/or pressure and/or concentration of reducing agent, or
- outlet means (9), in particular an injector, a nozzle or a outlet valve,
**characterized in that** the adjoining line means (10) close to said pressure-sensitive element having a distance (26) of at maximum 100 mm forming at least one heat sink (11), wherein in the region of the at least one heat sink (11) heat dissipation to the surroundings takes place in such a way that when the freezing temperature of the reducing agent (2) is reached, solidification and volume expansion begins there, and the heat sink (11) is provided with at least one of the following features of the line means (10): thermal conductivity, heat dissipation surface area, heat capacity, heat penetration, heat transfer and active cooling devices.

2. Apparatus (1) according to claim 1, **characterized in that** the heat sink (11) is formed by means of a zone (12) of the line means (10) which has a larger surface area (13) than other regions of said line means (10).

3. Apparatus according to patent claim 1 or 2, **characterized in that** the heat sink (11) is formed by means of a zone (12) of the line means (10) which has a heat bridge (14) to the environment.

4. Apparatus (1) according to one of the preceding claims, **characterized in that** the line means (10) are formed with a flexible wall (15).

5. Apparatus (1) according to one of the preceding claims, **characterized in that** the heat sink (11) is formed from a different material than other regions of said line means (10).

6. Apparatus (1) according to one of the preceding claims, **characterized in that** an activatable heating device (16) is provided in the zone (12) of the heat sink (11).

7. Apparatus (1) according to one of the preceding claims, **characterized in that** the line means (10) is provided, adjacent to the heat sink (11), with increased thermal insulation (17) in relation to other regions of said line means (10).

8. Method for producing a motor vehicle (18) having an apparatus (1) for delivering a reducing agent (2), said apparatus having at least two elements from the group comprising storage means (3), delivery means (4), deflecting means (6), detecting means (7), separating means (8), outlet means (9), wherein at least one element of said apparatus (1) is pressure-sensitive, that means it may be damaged and/or impaired in terms of function if subjected to an elevated pressure by the reducing agent, and further said elements of said apparatus (1) are connected to one another via a line means (10), comprising at least the following steps:
(a) arranging the elements of said apparatus (1) on the motor vehicle (18);
(b) cooling the motor vehicle (18);
(c) identifying at least one freezing point in said line means (10) adjoining said pressure-sensitive element;
(d) forming at least one heat sink (11) for heat dissipation to the surroundings between the freezing point and the pressure-sensitive element.

9. Method for configuring an apparatus (1) for delivering a reducing agent (2) according to one of claims 1 to 7 in a motor vehicle (18), comprising the following steps:
(a) arranging the elements of said apparatus (1) on the motor vehicle (18);
(b) cooling the motor vehicle (18);
(c) identifying at least one freezing point in said line means (10) adjoining said pressure-sensitive element;
(d) forming at least one heat sink (11) for heat dissipation to the surroundings between the freezing point and the pressure-sensitive element.

10. The method according to claim 8 or 9, in which a separate heat bridge (14) is positioned at the outside on the line means (10) in the zone (12) with the heat sink (11).

## Revendications

1. Dispositif (1) pour transporter un agent réducteur (2), comportant au moins deux éléments du groupe moyens d'accumulation (3), moyens de transport (4), moyens de déviation (6), moyens de détection (7), moyens de séparation (8), moyens de décharge (9), qui sont reliés les uns aux autres par des moyens de conduite (10), au moins un élément étant sensible à la pression, c'est-à-dire, qu'il réagit avec une détérioration et/ou une mauvaise fonction, quand l'agent réducteur exerce une pression majorée sur celui-ci, l'au moins un élément étant un élément qui est contenu dans le groupe suivant :
- moyens de transport (4), notamment une pompe,
- moyens de détection (7), notamment un capteur de température et/ou de pression et/ou de concentration de l'agent réducteur, ou
- moyens de décharge (9), notamment un injecteur, une buse ou une soupape de décharge,
**caractérisé en ce que** le moyen de conduite adjacent (10) forme à proximité de cet élément sensible à la pression au moins un puits de chaleur (11) avec une distance (26) de maximalement 100 mm, dans la région de l'au moins un puits de chaleur (11) une émission de chaleur dans l'environnement étant effectuée de manière telle, que lorsque la température de congélation de l'agent réducteur(2) est atteinte, la solidification et l'expansion cubique y commencent, et le puits de chaleur (11) est mis à disposition par au moins une des caractéristiques suivantes du moyen de conduite (10) : la conductibilité thermique, la surface de débit calorifique, la capacité thermique, la pénétration de la chaleur, la transmission de la chaleur et des dispositifs de refroidissement actifs.

2. Dispositif (1) selon la revendication 1, **caractérisé en ce que** le puits de chaleur (11) est formé avec une zone (12) du moyen de conduite (10), qui par rapport à d'autres régions de ce moyen de conduite (10) a une surface agrandie (13).

3. Dispositif (1) selon les revendications 1 ou 2, **caractérisé en ce que** le puits de chaleur (11) est formé avec une zone (12) du moyen de conduite (10) qui a un pont thermique (14) vers l'environnement.

4. Dispositif (1) selon l'une des revendications précédentes, **caractérisé en ce que** les moyens de conduite (10) sont réalisés avec une paroi flexible (15).

5. Dispositif (1) selon l'une des revendications précédentes, **caractérisé en ce que** le puits de chaleur (11) est formé avec un matériau différent par rapport à d'autres régions de ce moyen de conduite (10).

6. Dispositif (1) selon l'une des revendications précédentes, **caractérisé en ce que** dans la zone (12) du puits de chaleur (11) un chauffage (16) pouvant être activé est prévu.

7. Dispositif (1) selon l'une des revendications précédentes, **caractérisé en ce que** le moyen de conduite (10) adjacent du puits de chaleur (11) est pourvu d'une isolation thermique (17), qui par rapport à d'autres régions de ce moyen de conduite (10) est doté d'une isolation thermique plus grande (17).

8. Procédé de fabrication d'un véhicule automobile (18) avec un dispositif (1) pour transporter un agent réducteur (2), comprenant au moins deux éléments du groupe moyens d'accumulation (3), moyens de transport (4), moyens de déviation (6), moyens de détection (7), moyens de séparation, moyens de décharge, au moins un élément du dispositif (1) étant sensible à la pression, c'est-à-dire il réagit avec une détérioration et/ou une fonction détériorée, quand l'agent réducteur(2) exerce une pression augmentée sur celui-ci et dans la suite les éléments du dispositif (1) sont reliés par un moyen de conduite (10) les uns avec les autres, comprenant au moins en outre les étapes suivantes :
(a) agencement des éléments du dispositif(1) sur le véhicule automobile (18) ;
(b) refroidissement du véhicule automobile (18)
(c) identification d'au moins un point de congélation dans le moyen de conduite (10) adjacent de l'élément sensible à la pression ;
(d) réalisation d'au moins un puits de chaleur (11) vers l'émission dans l'environnement entre le point de congélation et l'élément sensible à la pression.

9. Procédé pour dimensionner un dispositif (1) dans le cas duquel au moins un élément du dispositif (1), moyens de séparation (8), moyens de décharge (9), au moins un élément du dispositif (1) étant sensible à la pression, c'est-à-dire, il réagit avec une détérioration et/ou une fonction inférieure, lorsque l'agent réducteur (2) exerce une pression élevée sur ce dernier, et dans la suite les éléments du dispositif (1) sont reliés avec un moyen de conduite, comprenant au moins les étapes suivantes :
a) agencement des éléments du dispositif (1) sur le véhicule automobile (18) ;
b) refroidissement du véhicule automobile (18);
c) identification d'au moins un point de congélation dans le moyen de conduite (10), adjacent de l'élément sensible à la pression;
d) formation d'au moins un puits de chaleur (11) pour l'émission de chaleur dans l'environnement entre le point de congélation et l'élément sensible à la pression.

10. Procédé selon les revendications 8 ou 9, dans le cas duquel dans la zone (12) avec le puits de chaleur (11) un pont thermique séparé (14) est positionné.
